# EUROPEAN PATENT APPLICATION

(11) **EP 3 656 206 A2**
(43) Date of publication of application: **27.05.2020**
(21) Application number: 18836034.1
(22) Date of filing: 16.07.2018
(51) Int. Cl.: A01G 13/00

(54) **FOLDING PROTECTIVE COVER**

(30) Priority: 18.07.2017 ES 201730944
(71) Applicant: Nova Fruticultura, S.L., 17600 Figueres (ES)
(72) Inventor: PARETA RUBAU, Joan Maria, 17600 Figueres (ES)
(74) Representative: González Poveda, Sara
(86) International application number: PCT/ES2018/070505
(87) International publication number: WO 2019/016423

(57) **Abstract**

A foldable protective cover, comprising: longitudinal rows of posts (1); longitudinal fixed cables (2a, 2b) arranged parallel to the rows of posts (1); and a series of longitudinally aligned sections of protective sheet (3), each section of sheet (3) being having a first end (31) secured to the fixed cables (2a, 2b); and a second end (32) fixed to movable cables (4a, 4b), the opposite ends of said movable cables being fixed to means for winding and unwinding that longitudinally move these movable cables over a distance approximately equal to the length of one section of sheet (3), between: a closed position, in which the sections of sheet (3) are unfolded; and an open position, in which the sections of sheet (3) are folded longitudinally against their respective first fixed end (31).

## Description

### Object of the invention

The object of the present invention is a foldable protective cover, intended to be positioned on a surface to be protected from atmospheric phenomena, for example rain, hail or frost.

### Field of application of the invention.

This invention is applicable in the agricultural sector for the protection of crops and fruit trees, in car parks for vehicles and in general in any surface to be protected from atmospheric phenomena.

### State of the art

At present, it is known to use crop protection devices against certain atmospheric phenomena that can damage crops, for example, hail protection nets that are mounted on cables fixed to rows of support posts are known.

Depending on the type of protection to be achieved, the surface of the cover will be formed by a flexible sheet, which may be, for example, a hail net, a shading mesh, or a waterproof sheet.

In the agricultural sector, these protective covers can have a length of 200 or 300 meters, the cover surface being formed with strips of sheet having a great length, oriented in the same direction as the rows of posts.

On existing protective covers, said strips of sheets can be folded and unfolded laterally, i.e. in a direction perpendicular to the rows of posts in order to open and close the cover.

This folding and unfolding is done manually and, given the length of the cover, this operation can be laborious and time consuming.

Some crops require for a correct maturation of the fruits that the cover is kept open in order to keep them exposed to sunlight; however, it is important that prior to harvesting they are not exposed to rain or hail, as this can spoil the entire harvest.

For the reasons stated above, the existing foldable protective covers do not allow to quickly and easily fold or unfold the cover and close said cover in the event of a storm approaching.

Therefore, the technical problem that arises is the development of a foldable protective cover that allows to quickly and easily open and close it.

### Description of the invention

The foldable protective cover, which is the object of this invention, is of the type comprising: longitudinal rows of posts arranged in parallel, fixed cables arranged parallel to the rows of posts, and at least one flexible protective sheet forming a cover surface.

To achieve the proposed objectives, this foldable protective cover comprises a series of sections of protective sheet, of approximately the same length, aligned in a longitudinal direction parallel to the fixed cables, each section of sheet having a first end fixed to the fixed longitudinal cables; and a second end fixed to movable cables.

These movable cables are arranged parallel to the fixed cables; and fixed at their opposite ends to simultaneous winding and unwinding means that move these movable cables over a distance approximately equal to the length of a section of protective sheet; displacing them between: - a closing position of the cover, in which all the sheet sections are unfolded thus covering a surface of a length approximately equal to that of the rows of posts; and - an opening position of the cover in which all the sheet sections are folded against their respective first fixed end.

This cover therefore allows, by means of the operation of the winding and unwinding means, the movement of the movable cables in one or another direction, the simultaneous folding or unfolding of each and every one of the sections of sheet, it being sufficient for this purpose that the movable cables are moved over a length approximately equal to the length of one of the sections of sheet.

This allows the opening or closing of the cover to be done quickly and easily.

These and other characteristics of the invention, set forth in the appended claims, will be more easily understood in view of the embodiment shown in the attached figures.

### Description of the figures

To complement the description that is being made and in order to facilitate the understanding of the characteristics of the invention, a set of drawings is attached to the present specification in which, with illustrative and non-limiting character, the following has been represented:
- Figure 1 shows a schematic front view of an embodiment of the protective foldable cover in closed position.
- Figure 2 shows a view analogous to the previous one with the cover in the open position.
- Figure 3 shows a schematic top plan view of an embodiment of the cover in which two alignments of sections of protective sheet in open position and two other alignments of sections of protective sheet in closed position have been represented.
- Figure 4 shows a schematic side view of the cover of the previous figure.
- Figure 5 shows a detail of the fixation of two opposite ends of a section of protective sheet to a fixed cable and to a movable cable respectively, and of the mounting of the intermediate area of said section of sheet on the fixed and movable longitudinal cables by means of movable flanges.
- Figure 6 shows a detail in perspective view of the fixation of the fixed longitudinal and transversal cables in crossing areas, by means of a part for the fixation and longitudinal guidance of a movable cable.

### Preferred embodiment of the invention

As can be seen in the example shown, the foldable protective cover comprises: rows of posts (1) arranged in parallel, first fixed cables (2a) mounted in respective rows of posts (1), second fixed cables (2b) arranged between consecutive rows of posts; and sections of protective sheet (3), of approximately the same length, aligned in a longitudinal direction parallel to the fixed cables (2a, 2b).

Each section of protective sheet (3) has a first end (31) fixed to the longitudinal fixed cables (2a, 2b); and a second end (32) fixed to longitudinal movable cables (4a, 4b) parallel to the fixed cables (2a, 2b).

The second fixed cables (2b) are fixed to transversal cables (5) which are secured to posts (1) of two consecutive rows.

The movable cables (4a, 4b) are fixed at their opposite ends to simultaneous winding and unwinding means, which comprise cable winches (6), either manually or electrically operated, which move said movable cables (4a, 4b) over a distance approximately equal to the length of a section of protective sheet (3).

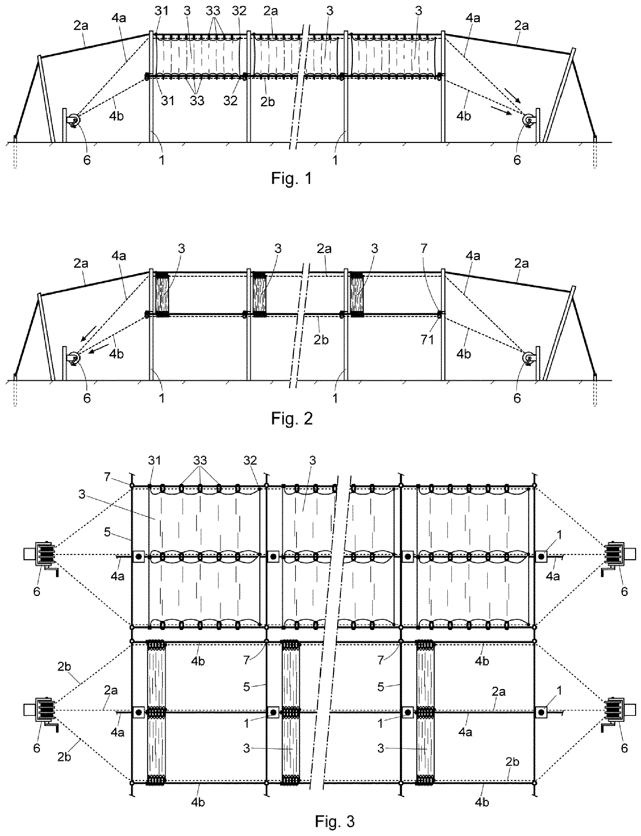

Said cable winches (6) move the movable cables (4a, 4b) longitudinally between: a closing position of the cover, represented in figure 1 and in the upper part of figure 2, in which the sheet sections of the same row are unfolded covering a surface of a length approximately equal to that of the rows of posts (1); and - an opening position of the cover, shown in figure 1 and in the lower part of figure 2, in which all the sheet sections of the same row are folded against their respective first fixed end (31).

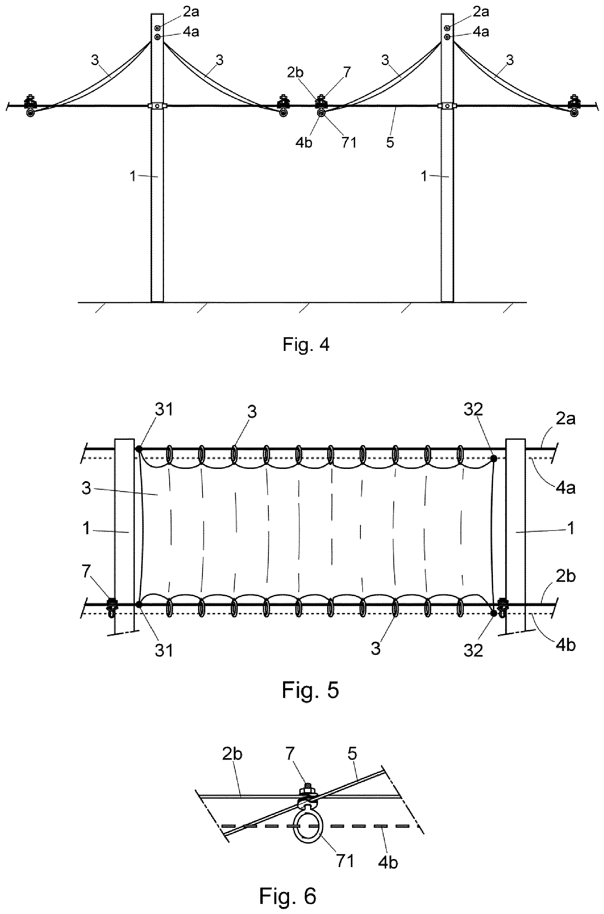

As can be seen more clearly in figure 5, the sections of sheet (3) have, between the first end (31) and second end (32), support flanges (33) mounted loosely and can be moved longitudinally with respect to the fixed cables (2a, 2b) and the movable cables (4a, 4b).

Figure 6 shows a longitudinal fixed cable (2b) and a transversal fixed cable (5) fixed in a crossing area located between the rows of posts (1), by means of a fixing clip (7) and longitudinal guidance of a mobile cable (4b).

The fixing clips (7) comprise a ring (71) for the loose passage and the guidance of the movable cable (4b) during its movement between the opening and closing positions of the cover.

Once the nature of the invention has been sufficiently described, as well as a preferred embodiment, it is stated for the appropriate purposes that the materials, form, size and arrangement of the elements described may be modified, provided that this does not entail an alteration of the essential features of the invention that are claimed below.

## Claims

1. A foldable protective cover, comprising:
- longitudinal rows of posts (1) arranged in parallel,
- longitudinal fixed cables (2a, 2b) arranged in parallel with the rows of posts (1), and
- at least one flexible protective sheet forming a cover surface and comprising at least a series of sections of protective sheet (3), of approximately equal length, each section of sheet (3) having a first end (31) attached to the longitudinal fixed cables (2a, 2b); and a second end (32) attached to movable cables (4a, 4b); said movable cables (4a, 4b) being arranged in parallel to the fixed cables (2a, 2b); **characterised in that**:
- the sections of sheets (3) are aligned in a longitudinal direction parallel to the fixed cables (2a, 2b) and to the rows of posts (1);
- the fixed cables comprise: first fixed cables (2a) mounted on respective rows of posts (1) and second fixed cables (2b) arranged between two consecutive rows of posts (1) and fixed to transversal cables (5) secured to posts (1) of consecutive rows;
- said fixed cables (2a, 2b) are fixed at their opposite ends to simultaneous winding and unwinding means (6), consisting of two cable winches (6), either manually or electrically operated, which move said movable cables (4a, 4b) over a distance approximately equal to the length of a section of sheet (3), between:
- a closing position of the cover, where the sections of sheet (3) are unfolded, covering an area having a length approximately equal to the length of the rows of posts (1); and
- an opening position of the cover wherein the sections of sheet (3) are folded in a longitudinal direction, against their respective first fixed end (31).

2. The cover according to claim 1, **characterised in that** the sheet sections (3) have, between the first end (31) and the second end (32), support flanges (33) mounted loosely and with the possibility of longitudinal displacement with respect to the fixed cables (2a, 2b) and/or the movable cables (4a, 4b).

3. The cover according to claim 1, **characterised in that** the longitudinal fixed cables (2b) and the transversal cables (5) are fixed in crossing areas located between consecutive rows of posts (1) by means of fixing clips (7) and longitudinal guidance of a movable cable (4b).

4. The cover according to claim 3, **characterised in that** the clips for fixing (7) comprise a ring (71) for the loose passage and guidance of a moving cable (4b).
